# EUROPEAN PATENT APPLICATION

(11) **EP 3 109 837 A1**
(43) Date of publication of application: **28.12.2016**
(21) Application number: 16173430.6
(22) Date of filing: 07.06.2016
(51) Int. Cl.: G07C 9/00, G08B 13/196

(54) **SYSTEM AND METHOD OF SMART INCIDENT ANALYSIS IN CONTROL SYSTEM USING FLOOR MAPS**

(30) Priority: 23.06.2015 US 201514747107
(71) Applicant: Honeywell International Inc., Morris Plains, NJ 07950 (US)
(72) Inventor: R, Dinesh Babu, Morris Plains, NJ 07950 (US)
(74) Representative: Houghton, Mark Phillip

(57) **Abstract**

An apparatus including a security system that protects a secured geographic area, a plurality of card readers along a periphery of the secured geographic area, a memory of the security system that saves a record of each human user admitted by a card reader of the plurality of card readers into the secured area, a user interface of the security system that receives an identifier of a human user and a time frame and a display of the security system that displays a map of the secured area including any entry and exit locations of the identified human user during the time frame from the secured area.

## Description

### FIELD

This application relates to security systems and more particular to tracking events in such systems.

### BACKGROUND

Systems are known to protect people and assets within secured areas. Such systems are typically based upon the use of one more wireless sensors that detect threats within the secured area.

Threats to people and assets may originate from any of number of different sources. For example, a fire may kill or injure occupants who have become trapped by a fire in a home. Similarly, carbon monoxide from a fire may kill people in their sleep.

Alternatively, an unauthorized intruder, such as a burglar, may present a threat to assets within the area. Intruders have also been known to injure or kill people living within the area.

In the case of intruders, sensors may be placed in different areas based upon the respective uses of those areas. For example, if people are present during some portions of a normal day and not at other times, then sensors may be placed along a periphery of the space to provide protection while the space is occupied while additional sensors may be placed within an interior of the space and used when the space is not occupied.

In most cases, threat detectors are connected to a local control panel. In the event of a threat detected via one of the sensors, the control panel may sound a local audible alarm. The control panel may also send a signal to a central monitoring station.

While conventional security systems work well, it is sometimes difficult to track the activities of authorized users in such systems. Accordingly, a need exists for better methods and apparatus for retrieving and displaying records regarding the use of such systems.

### BRIEF DESCRIPTION OF THE DRAWINGS

FIG. 1 illustrates a block diagram of a security system in accordance herewith;
FIG. 2 is a flow chart that may be used by the system of FIG. 1; and
FIG. 3 is a diagram of information flow of the system of FIG. 1.

### DETAILED DESCRIPTION

While disclosed embodiments can take many different forms, specific embodiments thereof are shown in the drawings and will be described herein in detail with the understanding that the present disclosure is to be considered as an exemplification of the principles thereof as well as the best mode of practicing same, and is not intended to limit the application or claims to the specific embodiment illustrated.

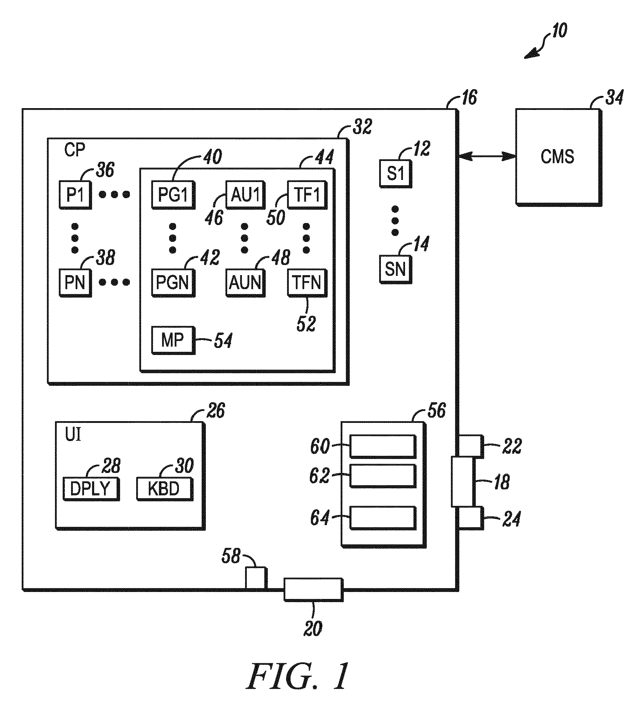

FIG. 1 is a simplified block diagram of a security system 10 shown generally in accordance with an illustrated embodiment. Included within the system is a number of sensors 12, 14 that detect threats within a secured geographic area 16. The sensors may be based upon any of a number of different technologies. For example, at least some of the sensors may be switches placed along a periphery of the secured area intended to detect intruders entering the secured area. Other sensors may be passive infrared (PIR) devices placed within the interior to detect intruders who have been able to circumvent sensors along the periphery.

Still other of the sensors may be environmental sensors intended to detect environmental threats to people and/or assets located within the secured area. At least some of these sensors may be smoke or fire detectors. Others may be carbon monoxide or flood detectors.

Located along the periphery of the secured area may be a number of entry/exit portals (e.g., doors, windows, etc.) 18, 20. Associated with each of the doors may be one or more identity detectors (e.g., card readers, fingerprint or scanners, etc.) 22 for people requesting entry into or egress from the secured area. Upon confirmation of identity by reading an access card, the card reader may activate an electric lock or door opener 24 allowing access to the secured area.

The security system may be controlled by an authorized human user via a user interface 26. The user may enter a personal identification number (PIN) through a keyboard 30 along with a function key to arm or disarm the system. Status information (e.g., armed, disarmed, etc.) may be shown on a display 28.

The sensors may be monitored by a control panel 32. Upon activation of one of the sensors, the control panel may send an alarm message to a central monitoring station 34. The central monitoring station may respond by summoning the appropriate help (e.g., police, fire department, etc.).

Included within the control panel, each of the sensors and card readers and the user interface may be one or more processor apparatus (processors) 36, 38 each operating under control of one or more computer programs 40, 42 loaded from a non-transitory computer readable medium (memory) 44. As used herein reference to a step performed by a computer program is also reference to the processor that executed that step.

For example, an alarm processor may monitor each of the sensors for activation. Upon activation of one of the sensors, the alarm processor may compose and send the alarm message to the central monitoring station.

Similarly, the alarm processor may be controlled by a status processor based upon the armed or disarmed state of the system. In this regard, the status processor may monitor the user interface for arm and disarm commands from an authorized user.

An access processor may provide entry into and egress for authorized persons into and from the secured area via the card readers. As each access card carried by an authorized user is presented to a card reader, information from the card is received by the access processor and compared with information contained within a set of files 46, 48 of authorized users. When a match is found, the access processor activates the lock or door opener on a corresponding door to grant entrance into or egress from the secured area. In addition to granting access, the access processor may also save a record of each event of entrance and exit into an event tracking file 50, 52. The event file may contain a name of the authorized user, an identifier of the door, an indication of whether the event was for entry or exit and a time.

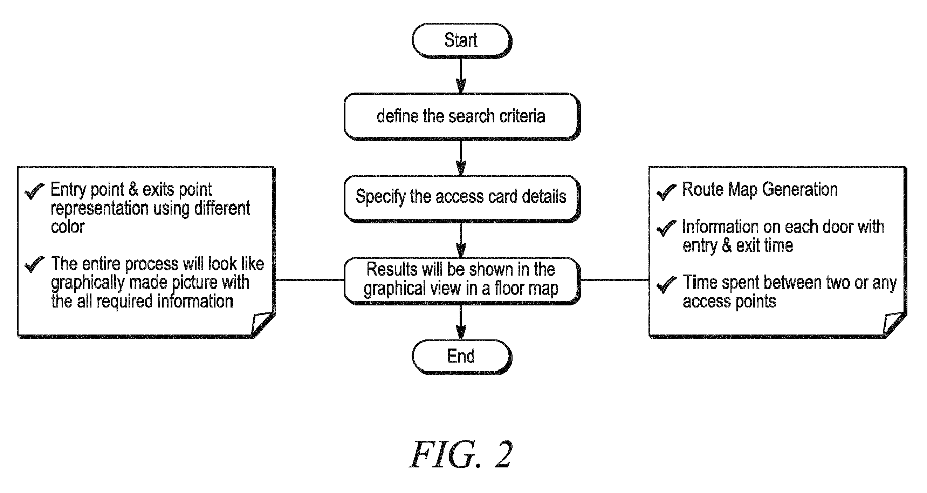

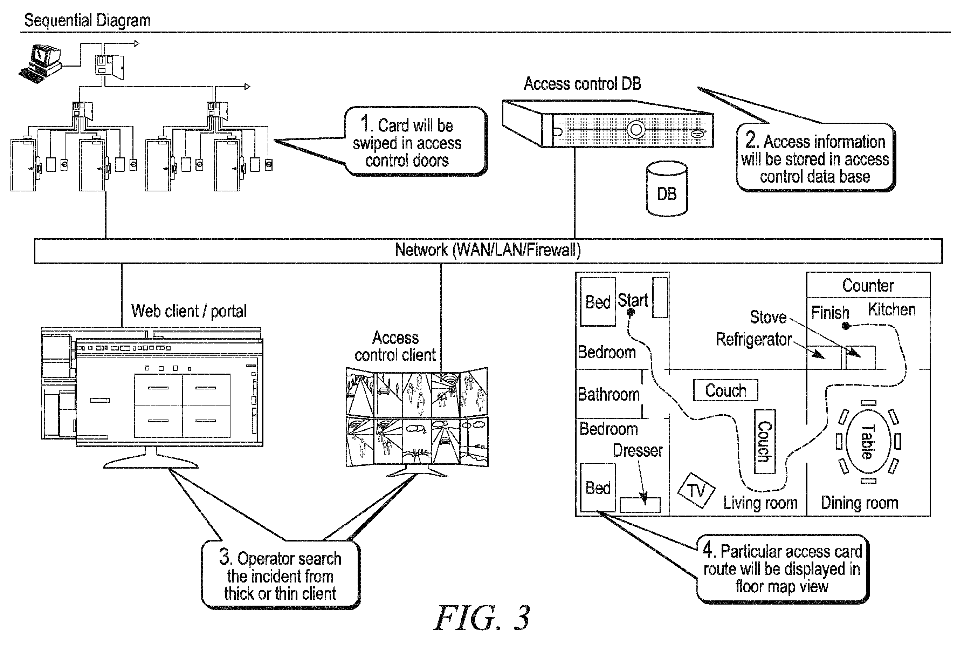

Under one illustrated embodiment, a user access tracking system displays entry and egress information for each user of the system. FIGs. 2 and 3 depicts one example of such a system.

Associated with the access tracking system is an associated icon displayed on the user interface. In this regard, the user access system may be activated via the icon displayed on the user interface. Upon activating the icon, a search criteria window is displayed for entry of a name and/or other identifying information of human user whose entry and exit history is to be tracked and displayed. Upon entering a name, the user may activate a search button on the display in order to identify any records associated with the identified user.

Alternatively, a browse button on the user interface may be used to retrieve a list of all authorized users from memory. In this case, the user of the interface may select one of the users from the display and activate the search button.

Upon activating the search button, a search processor may compare the name of the identified user with a content of each of the tracking files. Any matches may be transferred to a user tracking processor.

The user tracking processor may retrieve a map 54 of the secured area from memory and display any detected entry and exit records of the identified user on the map. Under the illustrated embodiment, a window 56 of user information may be displayed adjacent each door activated by the identified user to enter and exit the secured area. Under another illustrated embodiment, the doors may be color coded with one color (e.g., green) for entry points and another color (e.g., red) for exit points.

Displayed within the window adjacent each door may be a first field of information 60 that shows the identified user's name, a time of use of the door and whether the event was an entry or an exit. Another field 62 may show a photograph of the authorized user.

In one embodiment, a camera 58 adjacent each door may capture an image of each user as they access a card reader requesting entry or exit. The captured image may be saved in the corresponding event file. The image of the card user capture when the card is used may be displayed in a third filed 64 adjacent the image of the authorized user of the card. By comparing the images, security personnel may quickly detect unauthorized card use.

In another embodiment, a routing processor may connect entry and exit locations based upon time and superimpose the user's route as a black line superimposed on the map between the entry and exit locations. This may be important where the secured area has a number of different levels of security inside the secured area and a corresponding card reader adjacent the entrances to each.

The user tracking system offers a number of advantages over conventional systems. For example, in a conventional system in order to track the use of a particular access card, an operator or other investigator first must generate a card use report and, then, analyze that report. This analysis is a time consuming and often difficult task for a number of reasons. First, the operator has to understand a floor layout of the secured area including the location of each door. In large installations, it is difficult for the operator to remember the details of this information. Many installations (e.g., IT companies, airports, etc.) have large numbers of floors and locations. It is often burdensome for the operator to find or track a person's card use for incident analysis through such facilities using available statistical reports. It is also very time consuming. Accordingly, there is a need for the system of FIGs. 1-3 to automatically perform incident analysis in less time.

The system of FIGs. 1-3 performs a smart analysis using data from the records of the access control system and its floor maps. The benefits of the smart analysis are as follows. First, the system generates a route map based on card access information. On the floor map, the system displays swiped information from each card adjacent each door along with entry and exit times. It shows the time spent between any two or more access points. Entry points and exits points are differentiated using color. The number of entry and exits are provided for cases of multiple entry and exit locations. Where the secured area includes a number of linked sub-areas, the system dynamically pulls the linked maps based on the retrieved access information. The entire process dynamically updates the map with all required information.

The system allows the operator to rapidly grasp the context of use. It provides an indication of when the identified person first arrived. It provides indication of where the person went. It indicates how much time he/she has spent in each location. The number of events of each type are provided and displayed in the case of multiple entries and exits.

In general, the system allows multiple maps of the secured area to be linked based upon user access. If a person walks across the secured area through multiple areas, the location and route of the user can be tracked using linked maps. The solution is applicable for integrated security systems and BMS. Any type of floor map (e.g., AutoCAD), building information model (BIM), 3D modeling can be used for the mapped display of activity. The concepts are applicable for all supported alarms/ events of access control systems. The concepts are applicable for all card readers and card types. The system calculates the distance between access points. The system automatically adds notes of use on the generated maps. The system provides the option of saving the route maps in memory. The system also offers the option of exporting the route map with events for a specified time including the time spent between defined entry and exit points, the number of entry and exits points and other required information.

In general, the system includes a security system that protects a secured geographic area, a plurality of card readers along a periphery of the secured geographic area, a memory of the security system that saves a record of each human user admitted by a card reader of the plurality of card readers into the secured area, a user interface of the security system that receives an identifier of a human user and a time frame and a display of the security system that displays a map of the secured area including any entry and exit locations of the identified human user during the time frame from the secured area.

Alternatively, the system includes a security system that protects a secured geographic area, a plurality of card readers along a periphery of the secured geographic area, a memory of the security system, a processor of the security system coupled to the memory and each of the plurality of card readers, the processor saves a record of each human user admitted by a card reader of the plurality of card readers into the secured area, a user interface of the security system that receives an identifier of a human user and a time frame, a processor of the security system that compares the identified human user with each saved record of entry into the secured area and identifies any matches and a display of the security system that displays a map of the secured area based upon the matches including any entry and exit locations of the identified human user during the time frame from the secured area.

Alternatively, the system includes a security system that protects a secured geographic area, a plurality of card readers along a periphery of the secured geographic area, a memory of the security system that contains a record of authorized human users of the secured area, a processor of the security system that detects access cards read by each of the plurality of card readers, compares information read from the access card with the records of authorized users and admits authorized human users into the secured area, a processor of the security system that saves a record of each human user admitted into and exiting from the secured area, a user interface of the security system that receives an identifier of a human user, a processor of the security system that compares the identifier with each saved record of entry into the secured area and identifies any matches and a display of the security system that displays a map of the secured area based upon the matches including any entry and exit locations of the identified human user from the secured area.

From the foregoing, it will be observed that numerous variations and modifications may be effected without departing from the spirit and scope hereof. It is to be understood that no limitation with respect to the specific apparatus illustrated herein is intended or should be inferred. It is, of course, intended to cover by the appended claims all such modifications as fall within the scope of the claims. Further, logic flows depicted in the figures do not require the particular order shown, or sequential order, to achieve desirable results. Other steps may be provided, or steps may be eliminated, from the described flows, and other components may be add to, or removed from the described embodiments.

## Claims

1. An apparatus comprising:
a security system that protects a secured geographic area;
a plurality of card readers along a periphery of the secured geographic area;
a memory of the security system that saves a record of each human user admitted by a card reader of the plurality of card readers into the secured area;
a user interface of the security system that receives an identifier of a human user and a time frame; and
a display of the security system that displays a map of the secured area including any entry and exit locations of the identified human user during the time frame from the secured area.

2. The apparatus as in claim 1 further comprising a processor that depicts a name and other identifying information of the identified user on the display.

3. The apparatus as in claim 2 further comprising a processor that depicts the name and other identifying information adjacent the entry and exit locations used by the identified user.

4. The apparatus as in claim 3 wherein the depicted name and other identifying information further comprising a photograph of the identified user.

5. The apparatus as in claim 4 further comprising a processor that captures an image of the admitted user and displays it adjacent the identified user.

6. The apparatus as in claim 1 further comprising a processor that color codes the entry and exit locations of the identified user with different colors.

7. The apparatus as in claim 1 further comprising a processor that depicts a route of the identified person between the entry and exit locations.

8. An apparatus comprising:
a security system that protects a secured geographic area;
a plurality of card readers along a periphery of the secured geographic area;
a memory of the security system;
a processor of the security system coupled to the memory and each of the plurality of card readers, the processor saves a record of each human user admitted by a card reader of the plurality of card readers into the secured area;
a user interface of the security system that receives an identifier of a human user and a time frame;
a processor of the security system that compares the identified human user with each saved record of entry into the secured area and identifies any matches; and
a display of the security system that displays a map of the secured area based upon the matches including any entry and exit locations of the identified human user during the time frame from the secured area.

9. The apparatus as in claim 8 further comprising a processor that color codes the entry and exit locations of the identified user with different colors.

10. The apparatus as in claim 1 further comprising a processor that depicts a route of the identified person between the entry and exit locations.

11. The apparatus as in claim 8 further comprising a processor that depicts a name and other identifying information of the identified user on the display based upon information read by a reader from an access card.

12. The apparatus as in claim 11 further comprising a processor that depicts the name and other identifying information adjacent the entry and exit locations.

13. The apparatus as in claim 12 wherein the depicted name and other identifying information further comprising a photograph of the identified user.

14. The apparatus as in claim 13 further comprising a processor that captures an image of the admitted user and displays it adjacent the identified user.

15. An apparatus comprising:
a security system that protects a secured geographic area;
a plurality of card readers along a periphery of the secured geographic area;
a memory of the security system that contains a record of authorized human users of the secured area;
a processor of the security system that detects access cards read by each of the plurality of card readers, compares information read from the access card with the records of authorized users and admits authorized human users into the secured area;
a processor of the security system that saves a record of each human user admitted into and exiting from the secured area;
a user interface of the security system that receives an identifier of a human user;
a processor of the security system that compares the identifier with each saved record of entry into the secured area and identifies any matches; and
a display of the security system that displays a map of the secured area based upon the matches including any entry and exit locations of the identified human user from the secured area.
